Europäisches Patentamt

European Patent Office

Office européen des brevets

(11) Numéro de publication : **0 131 840**
**B1**

(12) # FASCICULE DE BREVET EUROPÉEN

(45) Date de publication du fascicule du brevet :
11.11.87

(21) Numéro de dépôt : **84107694.6**

(22) Date de dépôt : **03.07.84**

(51) Int. Cl.⁴ : **B 23 K 35/00**, B 23 K   9/02,
F 16 L 41/08

(54) Procédé d'assemblage par soudage d'un tube en acier inoxydable ferritique sur une plaque tubulaire en acier au carbone non allié.

(30) Priorité : 06.07.83 FR 8311262

(43) Date de publication de la demande :
23.01.85 Bulletin 85/04

(45) Mention de la délivrance du brevet :
11.11.87 Bulletin 87/46

(84) Etats contractants désignés :
BE CH DE FR GB IT LI NL SE

(56) Documents cités :
FR-A-   840 292
FR-A- 2 416 793
FR-E-    50 024
US-A- 2 785 459
US-A- 3 257 710

(73) Titulaire : STEIN INDUSTRIE Société anonyme dite:
19-21, Avenue Morane Saulnier B.P. 74
F-78141 Velizy-Villacoublay (FR)

(72) Inventeur : Franzolini, Marc
4, Allée les Fours Blancs Chevry II
F-91191 Gif sur Yvette (FR)
Inventeur : Maria, Edmond
21, rue Albert 1er
F-92600 Asnieres (FR)
Inventeur : Vanderschaeghe, Alain
20, rue Edgard Quinet
F-59100 Roubaix (FR)
Inventeur : Bezier, Jean
319, rue Verte
F-59170 Croix (FR)

(74) Mandataire : Weinmiller, Jürgen et al
Lennéstrasse 9 Postfach 24
D-8133 Feldafing (DE)

EP 0 131 840 B1

Jouve, 18, rue St-Denis, 75001 Paris, France

## Description

La présente invention concerne un procédé d'assemblage de tubes en acier inoxydable ferritique à moins de 0,03 % en poids de carbone et 17 à 18,5 % en poids de chrome sur une plaque tubulaire en acier au carbone non allié, comme décrit dans le préambule de la revendication 1.

Le document US-A-3 257 710 décrit des procédés de soudage sur une plaque tubulaire en acier au carbone non allié, de faisceaux de tube soit en Monel, soit en Inconel, soit en acier inoxydable austénitique, en déposant, préalablement au soudage des extrémités des tubes, sur la face de la plaque tubulaire opposée au faisceau de tubes, un revêtement d'un alliage de composition proche de celle de l'alliage des tubes.

Toutefois on ne peut assembler des tubes en acier inoxydable ferritique sur une plaque tubulaire en acier au carbone non allié en déposant au préalable un revêtement d'acier inoxydable ferritique sur la plaque tubulaire, l'adhérence sur l'acier au carbone non allié de la qualité courante utilisée pour les plaques tubulaires de l'acier inoxydable ferritique n'étant pas bonne.

Il a aussi été proposé de déposer par fusion (feuillard avec flux et électrodes enrobées) sur la face de la plaque tubulaire opposée au faisceau tubulaire un revêtement en alliage type « Inconel » (marque déposée par la société Inco) à 72 % en poids au moins de nickel, 14 à 17 % de chrome et 6 à 10 % de fer. Cet alliage est très coûteux, et l'assemblage présente des risques de fissuration en zone de liaison et rechargement et dans les soudures par corrosion sous tension.

La présente invention a pour but de procurer un dispositif d'assemblage moins coûteux, et qui supprime le risque de fissuration dans le rechargement et dans les soudures.

Le procédé selon l'invention est caractérisé en ce que le métal de la couche de revêtement est un acier non allié contenant au plus 0,045 % en poids de carbone.

De préférence, cet acier non allié contient en poids au plus 0,10 % de silicium, 0,50 % de manganèse, 0,025 % de phosphore et 0,025 % de soufre.

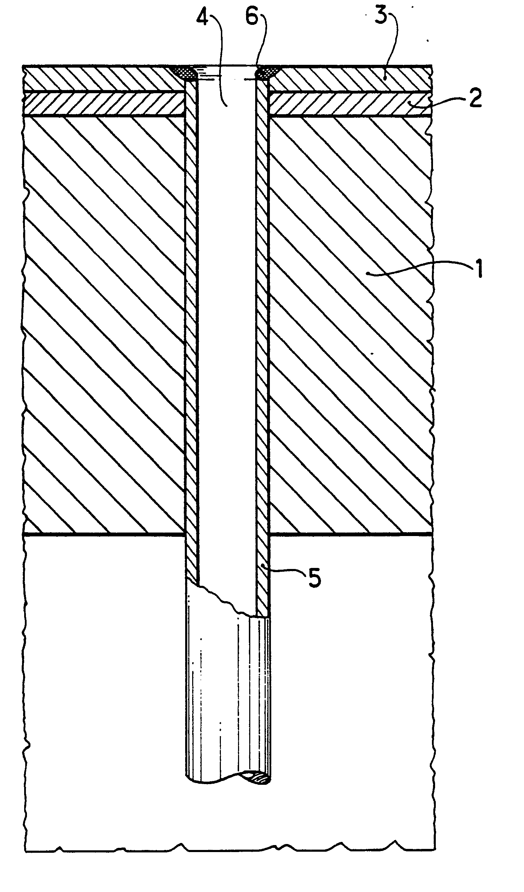

Il est décrit ci-après, à titre d'exemple et en référence à la figure unique du dessin annexé, un procédé d'assemblage selon l'invention.

La plaque tubulaire (1), en acier au carbone de nuance A 48 CP (moins de 0,20 % en poids de carbone, moins de 0,40 % de silicium, de 0,80 à 1,50 % de manganèse, moins de 0,04 % de phosphore, moins de 0,025 % de soufre, moins de 0,5 % de nickel, moins de 0,25 % de chrome, moins de 0,10 % de molybdène, moins de 0,05 % de vanadium, moins de 0,04 % de niobium, au plus 0,18 % de cuivre) est munie par dépôt par fusion (feuillard avec flux et électrodes enrobées) de deux couches successives (2), (3) de revêtement en acier non allié à bas carbone (à moins de 0,045 % en poids de carbone, moins de 0,10 % de silicium, moins de 0,5 % de manganèse, moins de 0,025 % de phosphore et moins de 0,025 % de soufre).

On introduit ensuite dans les trous de la plaque tubulaire les tubes en acier inoxydable ferritique de nuance Z2 CT 18 (17 à 18,5 % de chrome, moins de 0,03 % en poids de carbone, moins de 0,5 % de phosphore, moins de 0,01 % de soufre, moins de 0,5 % de nickel, moins de 0,10 % de cuivre, moins de 0,05 % d'aluminium, une teneur en titane égale à 15 fois la somme carbone + azote, ce produit étant toutefois inférieur à 0,75 %, moins de 0,02 % d'azote, avec le total azote + carbone inférieur à 0,04 %). On enfile les tubes jusqu'à ce que leur extrémité supérieure vienne à un niveau intermédiaire de la couche supérieure du revêtement en acier non allié à bas carbone. On effectue alors le soudage à l'arc sous gaz inerte (argon et/ou hélium), avec ou sans métal d'apport, sur le pourtour de l'extrémité du tube entre celle-ci et la couche d'acier à bas carbone.

## Revendications

1. Procédé d'assemblage d'un faisceau de tubes (5) en acier inoxydable ferritique à moins de 0,03 % en poids de carbone et 17 à 18,5 % en poids de chrome sur une plaque tubulaire (1) en acier au carbone non allié, dans lequel on dépose par fusion (à l'aide d'un feuillard en présence d'un flux et avec des électrodes enrobées) sur la face de la plaque tubulaire opposée au faisceau de tubes au moins une couche de revêtement (2, 3) en un métal différent de celui de la plaque tubulaire, on introduit les tubes dans les trous de la plaque tubulaire de façon que leurs extrémités viennent à un niveau intermédiaire de la couche de revêtement supérieure (3), et l'on soude (6) les extrémités des tubes sur la couche de revêtement à l'arc sous gaz inerte avec ou sans métal d'apport, caractérisé en ce que le métal de la couche de revêtement est un acier non allié contenant au plus 0,045 % en poids de carbone.

2. Procédé selon la revendication 1, caractérisé en ce que l'acier non allié du revêtement contient en poids au plus 0,10 % de silicium, 0,50 % de manganèse, 0,025 % de phosphore et 0,025 % de soufre.

## Claims

1. A method for assembling a bundle of tubes (5) of ferritic stainless steel with less than 0.03 % by weight of carbone and 17 to 18,5 % by weight of chromium on a tubular plate (1) of non-alloyed carbon steel, in which at least one covering layer (2, 3) of a metal differing from that of the tubular plate is deposited by fusion (by means of a sheet in the presence of a flux and with coated electrodes) on the surface of the tubular plate opposite the bundle of tubes, wherein the tubes are introduced into the holes of the tubular plate in such a way that their ends are located at an intermediate level of the upper covering layer (3), and wherein the ends of the tubes are arch-welded (6) under inert gas with or without filling metal onto the covering layer, characterized in that the metal of the covering layer is a non-alloyed steel containing at most 0,045 % by weight of carbone.

2. A method according to claim 1, characterized in that the non-alloyed steel of the covering layer contains at most 0,10 % by weight of silicium, 0,50 % by weight of manganese, 0,025 % by weight of phosphorus and 0,025 % by weight of sulfur.

**Patentansprüche**

1. Verfahren zum Aufbau eines Rohrbündels (5) aus nichtrostendem Ferrit-Stahl mit weniger als 0,03 Gew.% Kohlenstoff und 17 bis 18,5 Gew.% Chrom auf einer Rohrplatte (1) aus nichtlegiertem Kohlenstoffstahl, bei dem man durch Schmelzen (mithilfe eines Blechs in Gegenwart eines Flux und mit umhüllten Elektroden) mindestens eine Deckschicht (2, 3) aus einem anderen Metall als dem der Rohrplatte auf die Seite der Rohrplatte aufbringt, die dem Rohrbündel entgegengesetzt liegt, wobei man die Rohre so in die Löcher der Rohrplatte einführt, daß ihre Enden bis zu einem Zwischenniveau der oberen Deckschicht (3) gelangen, und durch Lichtbogenschweißung die Enden der Rohre unter Inertgas mit oder ohne Zusatzmetall auf die Deckschicht befestigt, dadurch gekennzeichnet, daß das Metall der Deckschicht ein nicht-legierter Stahl mit höchstens 0,045 Gew.% Kohlenstoff ist.

2. Verfahren nach Anspruch 1, dadurch gekennzeichnet, daß der nicht-legierte Stahl der Deckschicht in Gewichtsprozent höchstens 0,10 % Silicium, 0,50 % Mangan, 0,025 % Phosphor und 0,025 % Schwefel enthält.